# EUROPÄISCHE PATENTANMELDUNG

(11) **EP 1 085 302 A2**
(43) Veröffentlichungstag der Anmeldung: **21.03.2001**
(21) Anmeldenummer: 00120372.8
(22) Anmeldetag: 16.09.2000
(51) Int. Cl.: G01F 1/66

(54) **Ultraschall-Durchflussmesser**

(30) Priorität: 18.09.1999 DE 19944829
(71) Anmelder: KUNDO SYSTEMTECHNIK GmbH, D-78112 St. Georgen (DE)
(72) Erfinder: Broghammer, Rudolf, 78664 Eschbronn-Mariazell (DE)
(74) Vertreter: Goy, Wolfgang, Dipl.-Phys.

(57) **Zusammenfassung**

Ein Ultraschall-Durchflußmesser weist ein Meßrohr 1 auf. An den beiden Enden dieses Meßrohres 1 befindet sich jeweils ein rohrförmiges Gehäuse 2. Innerhalb dieses Gehäuses 2 ist - über Strömungsrippen 5 verbunden - ein zum Innern des Meßrohres 1 hin offenes Trägergehäuse 4 angeordnet, in welchem ein Ultraschallwandler 12 sowie ein Temperatursensor 14 angeordnet sind. Das Trägergehäuse 4 ist mit einer Abdeckfolie verschlossen. Das Innere des Trägergehäuses 4 ist über einen Durchführungskanal 7 für die elektrischen Kabel mit der Außenmantelfläche des Gehäuses 2 verbunden.

## Beschreibung

Die Erfindung betrifft einen Ultraschall-Durchflußmesser nach dem Oberbegriff des Anspruchs 1.

Das Grundprinzip der Ultraschall-Durchflußmengenmesser für Flüssigkeiten besteht darin, die Bestimmung der Strömungsgeschwindigkeit durch Messung der Ultraschall-Impulslaufzeiten in Strömungsrichtung und in Gegenrichtung mittels Piezo-Sende- und Empfangs-Kristallen durchzuführen. Die Differenz der beiden Impulsfrequenzen ist der Strömungsgeschwindigkeit proportional.

Ultraschall-Durchflußmesser sind in verschiedenen Ausführungsformen bekannt. Der erfindungsgemäße Ultraschall-Durchflußmesser geht von einem Meßrohr aus, bei dem die Ultraschallwandler in Form von Piezo-Scheiben innerhalb des Meßrohres auf dessen Mittelachse angeordnet sind. Das Problem bei diesen bekannten Ultraschall-Durchflußmessern besteht in der Anbringung der Ultraschallwandler sowie ggf. von Temperatursensoren (für die Wärmeenergiemengenmessung) innerhalb des Meßrohres. Die bisherigen Lösungen sehen Halteelemente vor, welche von dem Meßrohr aus ins Innere ragen. Insbesondere ist auch die Kabelführung für die elektrische Versorgung der Ultraschallwandler problematisch.

Davon ausgehend liegt der Erfindung die **Aufgabe** zugrunde, einen konstruktiv einfacheren Ultraschall-Durchflußmesser der eingangs angegebenen Art zu schaffen.

Die technische **Lösung** ist gekennzeichnet durch die Merkmale im Kennzeichen des Anspruchs 1.

Der Vorteil des erfindungsgemäßen Ultraschall-Durchflußmessers liegt in einem äußerst einfachen konstruktiven Aufbau. Die Grundidee besteht in einem auf das Ende des Meßrohres aufsetzbaren Gehäuse, in dem einstückig ein auf der Mittelachse liegendes Trägergehäuse angeordnet ist. Dieses Trägergehäuse ist nur in Richtung Aussendung bzw. Empfang des Ultraschallstrahls vor der endgültigen Montage offen und im fertig montierten Zustand durch ein flüssigkeitsdicht aufgebrachtes Abdeckelement verschlossen. Das Trägergehäuse definiert somit eine Vertiefung, in welche der Ultraschallwandler sowie eventuelle weitere Elemente eingesetzt werden können. Nach dem Einsetzen wird die Öffnung des Trägergehäuses - wie ausgeführt - durch das Abdeckelement verschlossen. Da der Ultraschallwandler sowie ggf. weitere elektronische Elemente über Kabel mit außerhalb des Ultraschall-Durchflußmessers befindlichen elektronischen Geräten verbunden werden müssen, weist das Gehäuse sowie das Trägergehäuse wenigstens einen Durchführungskanal für die Kabel auf, wobei dieser Kanal auf der Mantelfläche des äußeren Gehäuses mündet. Das Gehäuse selbst kann auf dem Meßrohr beispielsweise mittels Formschluß gehalten werden, wobei zur zusätzlichen Sicherung eine Verpressung in partiellen Bereichen vorgesehen sein kann. Der wesentliche Vorteil des erfindungsgemäßen Ultraschall-Durchflußmessers besteht darin, daß zunächst der Ultraschallwandler mit eventuellen weiteren Elementen als kompakte Einheit innerhalb des Trägergehäuses angeordnet werden kann und daß das Gehäuse dann als Baueinheit auf dem Meßrohr befestigt werden kann.

Der Vorteil der Weiterbildung gemäß Anspruch 2 besteht darin, daß sich innerhalb des Meßrohres optimale Strömungsbedingungen ergeben, weil die Strömungsrippen nur unwesentlich den Durchtrittsquerschnitt für die Flüssigkeit verringern. Außerdem wird das Trägergehäuse durch die Strömungsrippen sicher axial innerhalb des Gehäuses gehalten.

Die Weiterbildung gemäß Anspruch 3 hat den Vorteil einer optimalen Führung des Durchführungskanals, so daß die Strömungsrippen nicht nur dazu dienen, das Trägergehäuse axial innerhalb des Meßrohres zu fixieren, sondern daß die Strömungsrippen auch die Funktion zur Aufnahme des Durchführungskanals haben. Dadurch stört der Verlauf der Kabel nicht die Strömung in der Einrichtung.

Die Weiterbildungen der Ansprüche 4 und 5 haben den Vorteil, daß sich optimale Strömungsverhältnisse innerhalb der Meßeinrichtung ergeben, wobei die Flüssigkeit das axiale Trägergehäuse - bis auf die Strömungsrippen - allseitig umströmt.

Um den Ultraschallwandler sicher innerhalb des Trägergehäuses anordnen zu können, dient die Weiterbildung gemäß Anspruch 6. Die Grundidee besteht darin, auf dem scheibenförmigen Träger den Ultraschallwandler anzuordnen und diese Baueinheit dann in dem Trägergehäuse anzuordnen, beispielsweise einzupressen. Der scheibenförmige Träger kann dabei aus Edelstahl sein.

Die Weiterbildung gemäß Anspruch 7 optimiert die Anordnung des scheibenförmigen Trägers innerhalb des Trägergehäuses.

Die Weiterbildung gemäß Anspruch 8 schlägt vor, daß der Ultraschallwandler nicht auf der äußeren Oberseite des scheibenförmigen Trägers angeordnet ist, sondern daß der scheibenförmige Träger eine gehäuseartige Aufnahme oder Vertiefung für die Piezo-Scheibe des Ultraschallwandlers besitzt, so daß dieser geschützt innerhalb des scheibenförmigen Trägers angeordnet ist.

Die Weiterbildung gemäß Anspruch 9 gewährleistet eine sichere Anordnung der Piezo-Scheibe innerhalb des scheibenförmigen Trägers. Das Abstützelement kann insbesondere aus Kunststoff bestehen.

Um eine einwandfreie Abdichtung der innerhalb des Trägergehäuses angeordneten Elemente zu schaffen, schlägt die Weiterbildung gemäß Anspruch 10 vor, daß das Abdichtelement an der Stirnseite des scheibenförmigen Trägers befestigt ist. In diesem Fall ist der scheibenförmige Träger - wie zuvor bereits ausgeführt - abgedichtet innerhalb des Trägergehäuses angeordnet. Beispielsweise kann in einer Umfangsnut des scheibenförmigen Trägers ein O-Ring angeordnet sein.

Die Weiterbildung gemäß Anspruch 11 hat den Vorteil, daß dadurch eine technisch einfache elektrische Verbindung mit den Anschlußpolen der Piezo-Scheibe und den nach außen geführten Kabeln realisiert ist. Die elektrischen Kontaktstifte können dabei mittels Leitkleber oder mittels Lötung elektrisch mit der Piezo-Scheibe verbunden sein.

Bei der Metallfolie in der Weiterbildung gemäß Anspruch 12 kann es sich um eine Edelstahlfolie mit einer Dicke von beispielsweise 100 µm handeln.

Die Weiterbildungen der Ansprüche 13 und 14 haben den Vorteil einer optimalen Führung des Ultraschallstrahles innerhalb des Meßrohres. Bei dem Durchflußrohr kann es sich um ein Kunststoffteil aus zwei Kunststoffhälften handeln, welche dicht eingepreßt werden können.

Eine bevorzugte Weiterbildung und Anwendung des erfindungsgemäßen Ultraschall-Durchflußmessers schlägt Anspruch 15 vor. Durch die zusätzliche Messung der Temperatur kann das Gerät als Wärmeenergiemengenmesser beispielsweise in Heizungsanlagen verwendet werden, wobei sich der Energieverbrauch aus der Temperaturdifferenz zwischen Vorlauf und Rücklauf des Heizungswassers sowie aus der durchfließenden Heizwassermenge ergibt.

Die Weiterbildung gemäß Anspruch 16 hat den Vorteil, daß der Temperatursensor gleichermaßen einfach wie die Piezo-Scheibe des Ultraschallwandlers an dem scheibenförmigen Träger angeordnet werden kann, wobei speziell der Temperatursensor auf einer Leiterplatte angeordnet werden kann.

Die Weiterbildung gemäß Anspruch 17 hat den Vorteil, daß der Temperatursensor die exakte Temperatur des durchfließenden Wassers mißt, weil durch das Wärmeleitelement die exakte Temperatur an den Temperatursensor gelangt. Für die Verbesserung der Wärmeübertragung kann beispielsweise ein Silikonpad oder eine Wärmeleitpaste dienen, welche am Boden des Trägergehäuses angeordnet sind.

Dadurch ist insgesamt gemäß Anspruch 18 ein technisch einfacher und sicher arbeitender Wärmeenergiemengenmesser geschaffen, welcher sowohl die Durchflußmenge an Heizwasser als auch die Temperatur mißt.

Ein Ausführungsbeispiel eines erfindungsgemäßen Ultraschall-Durchflußmessers in Form eines Wärmeenergiemengenmessers wird nachfolgend anhand der Zeichnungen beschrieben. In diesen zeigt:
- Fig. 1: einen vertikalen Längsschnitt durch die Meßvorrichtung;
- Fig. 2: einen horizontalen Längsschnitt durch die Meßvorrichtung;

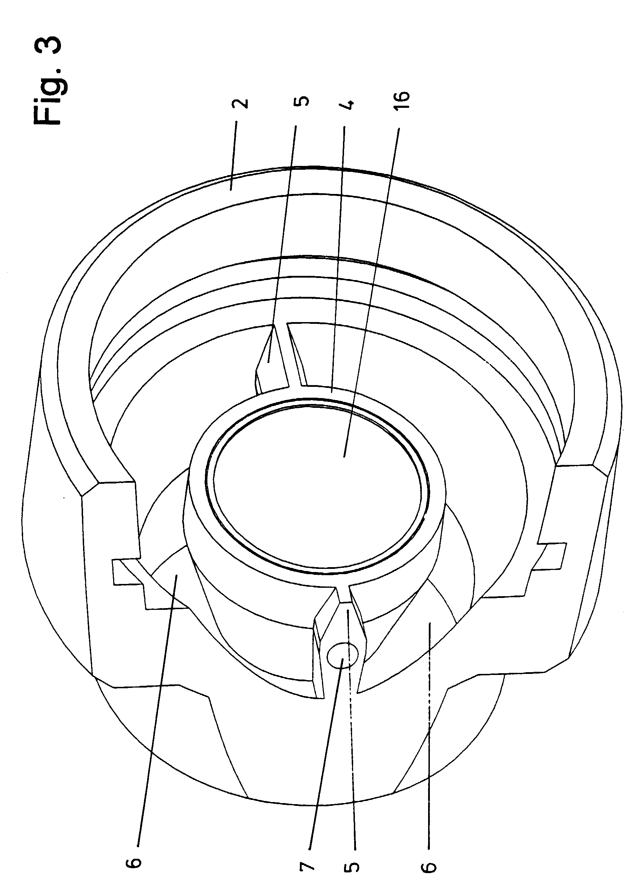

- Fig. 3: eine perspektivische, teilweise geschnittene Innenansicht des Sensorgehäuses;
- Fig. 4: eine perspektivische Explosionsdarstellung des in Fig. 1 und 2 linken Sensors;
- Fig. 5: eine perspektivische Explosionsdarstellung des in Fig. 1 und 2 rechten Sensors.

Die Meßeinrichtung weist ein Meßrohr 1 auf. Jedes der beiden Enden dieses Meßrohres 1 ist mit einem Gehäuse 2 versehen, welches auf das Meßrohr 1 unter Zwischenanordnung eines Dichtringes 3 kraftschlüssig aufgepreßt ist. Durch Verformung von partiellen Bereichen ist eine zusätzliche formschlüssige Sicherung geschaffen.

Das Gehäuse 2 ist ebenfalls im wesentlichen rohrförmig ausgebildet. In der axialen Mitte des Gehäuses 2 befindet sich ein Trägergehäuse 4, welches einstückig über zwei Strömungsrippen 5 mit der Innenwand des Gehäuses 2 verbunden ist. Der Bereich zwischen dem Trägergehäuse 4 und dem Gehäuse 2 definiert zwei im wesentlichen teilringförmige Durchflußöffnungen 6.

Das Trägergehäuse 4 ist im wesentlichen als Kegelstumpf ausgebildet, wobei das eine Ende geschlossen und das andere Ende offen ist, so daß das Trägergehäuse 4 einen Innenraum bzw. eine Vertiefung definiert. Dieser Innenraum ist über einen Durchführungskanal 7 mit der Außenmantelfläche des Gehäuses 2 verbunden, wobei der Durchführungskanal durch die eine Strömungsrippe 5 verläuft.

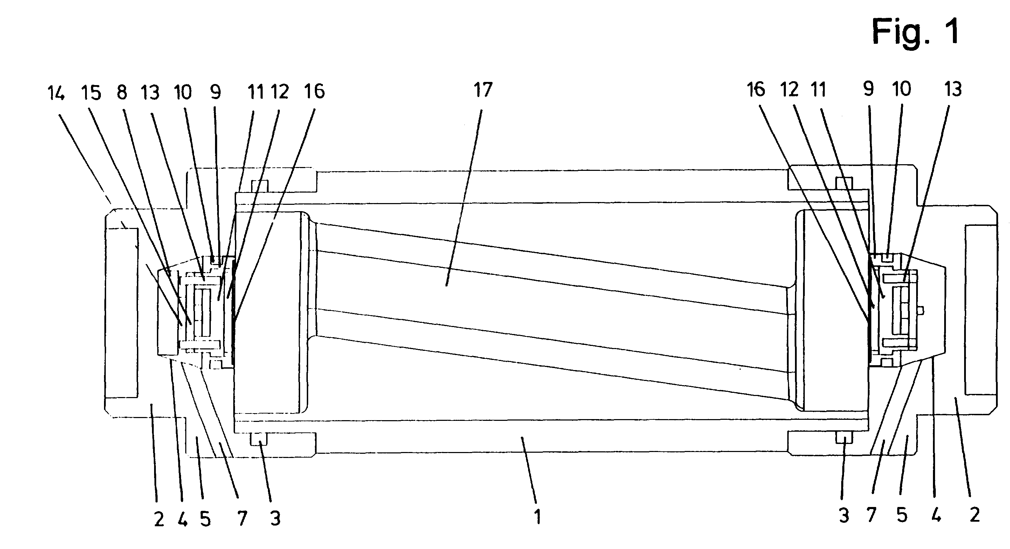

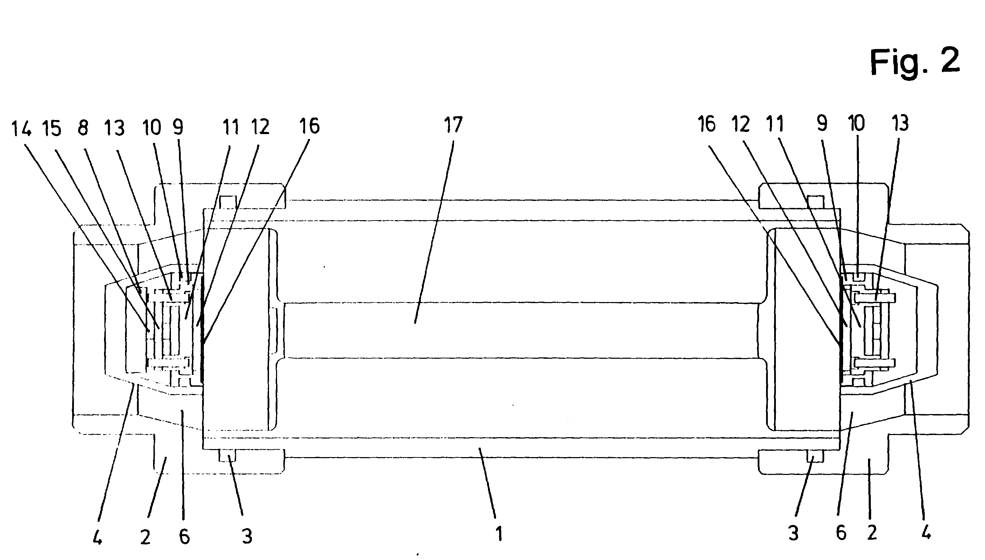

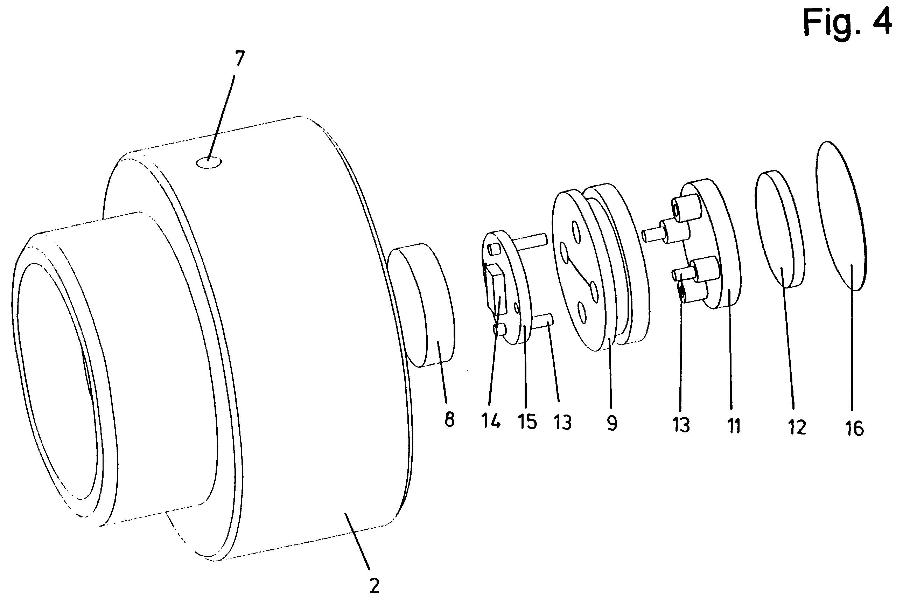

Der in Fig. 1 und 2 dargestellte linke Sensor (vgl. auch Fig. 4) weist zunächst in dem Trägergehäuse 4 ein eingelegtes Wärmeleitelement 8 in Form eines Silikonpads zur Wärmeübertragung auf. Statt dessen kann auch eine Wärmeleitpaste eindosiert sein.

Als nächstes wird eine vormontierte Baueinheit mit den Sensorelementen in das Trägergehäuse 4 eingesetzt. Diese Baueinheit weist einen scheibenförmigen Träger 9 aus Edelstahl auf, zwischen dem und der Innenwand des Trägergehäuses 4 ein Dichtring 10 angeordnet ist. Dieser scheibenförmige Träger 9 weist zum Innern des Meßrohrs 1 hin gerichtet eine Vertiefung auf, innerhalb der sich ein Abstütztelement 11 aus Kunststoff befindet, welches einen Ultraschallwandler 12 in Form einer Piezo-Scheibe trägt. Der scheibenförmige Träger 9 sowie das Abstützelement 11 werden dabei von elektrischen Kontaktstiften 13 durchragt, welche mit den entsprechenden Polen der Piezo-Scheibe verlötet oder mit Leitkleber verbunden sind. An diese elektrischen Kontaktstifte 13 sind die - nicht dargestellten - Kabel angeschlossen, welche durch den Durchführungskanal 7 nach außen geführt sind.

Die Baueinheit weist weiterhin einen Temperatursensor 14 auf, welcher auf der anderen Seite des scheibenförmigen Trägers 9 angeordnet ist und auf einer Leiterplatte 15 aufgebondet oder aufgelötet und ebenfalls mit elektrischen Kontaktstiften 13 versehen ist. Auch die daran angeschlossenen Kabel dieses Temperatursensors 14 sind über den Durchführungskanal 7 nach außen geführt.

In die kleinen Vertiefungen, die sich an den restlichen zwei der eingebrachten Kontaktstifte befinden, wird in einem weiteren Arbeitsgang eine niedrigviskose Leitmasse oder Leitkleber in genauer Mengendosierung eingebracht.

Diese Baueinheit aus scheibenförmigem Träger 9 (mit Dichtring 10), Abstützelement 11, Ultraschallwandler 12, Temperatursensor 14 sowie Leiterplatte 15 einschließlich der elektrischen Kontaktstifte 13 ist in das Trägergehäuse 4 dicht eingesetzt. Auf die Stirnseite des scheibenförmigen Trägers 9 wird schließlich noch ein Abdichtelement in Form einer Edelstahlfolie mit einer Dicke von 100 µm flüssigkeitsdicht mittels Laser verschweißt. Die Edelstahlfolie des Abdichtelements 16 ist dabei hochtemperaturfest auf der Piezo-Scheibe des Ultraschallwandlers 12 aufgeklebt.

Wird das Sensorgehäuse nun derart positioniert, daß die Leitmasse bzw. der Leitkleber aufgrund seiner niedrigen Viskosität und der Schwerkraft auf die Elektroden des Piezos gelangen kann, ist hiermit eine elektrische Verbindung hergestellt.

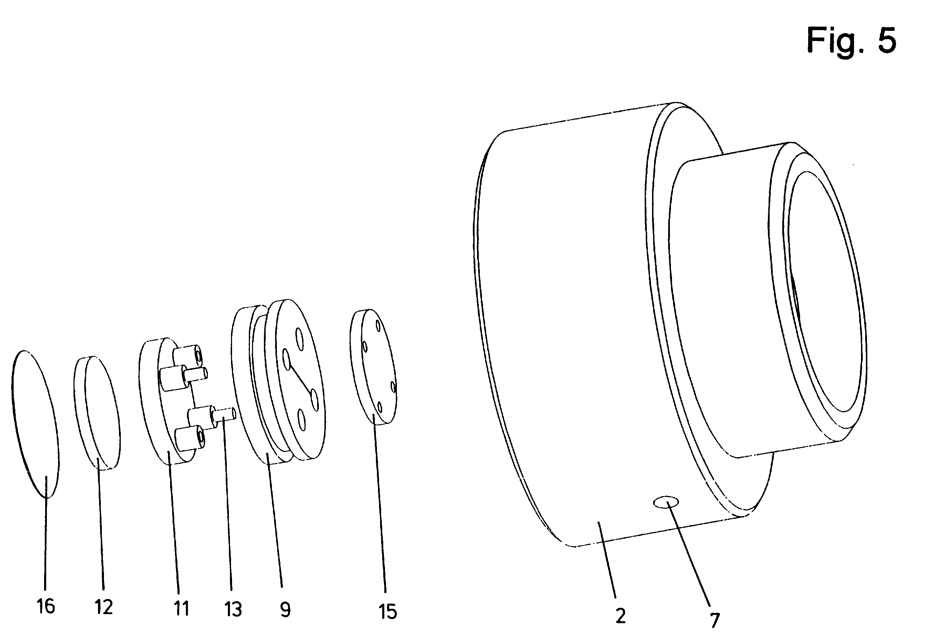

Der in den Fig. 1 und 2 dargestellte rechte Sensor (vgl. auch Fig. 5) unterscheidet sich von dem zuvor beschriebenen Sensor dadurch, daß kein Temperatursensor 14 sowie kein Wärmeleitelement 8 vorgesehen ist. Ansonsten ist der Aufbau identisch.

Schließlich ist noch zwischen den beiden Sensoren ein schräg gestelltes Durchflußmeßrohr 17 mit ovalem Querschnitt dicht eingepreßt, wobei das Durchflußmeßrohr 17 aus zwei Kunststoffhälften mit den Stirnseiten der Gehäuse 2 flüssigkeitsdicht verbunden ist.

### Bezugszeichenliste

- 1: Meßrohr
- 2: Gehäuse
- 3: Dichtring
- 4: Trägergehäuse
- 5: Strömungsrippe
- 6: Durchflußöffnung
- 7: Durchführungskanal
- 8: Wärmeleitelement
- 9: Träger
- 10: Dichtring
- 11: Abstützelement
- 12: Ultraschallwandler
- 13: elektrischer Kontaktstift
- 14: Temperatursensor
- 15: Leiterplatte
- 16: Abdichtelement
- 17: Durchflußmeßrohr

## Patentansprüche

1. Ultraschall-Durchflußmesser
mit einem Meßrohr (1),
mit zwei im Innern des Meßrohres (1) an dessen beiden Enden jeweils angeordneten Ultraschallwandlern (12) und
mit Kabeln für die elektrische Versorgung der Ultraschallwandler (12),
**dadurch gekennzeichnet,**
daß an den beiden Enden des Meßrohres (1) jeweils ein Gehäuse (2) angeordnet ist,
daß innerhalb des Gehäuses (2) ein zum Innern des Meßrohres (1) hin offenes Trägergehäuse (4) angeordnet ist, in welchem der Ultraschallwandler (12) angeordnet ist,
daß zwischen dem äußeren Gehäuse (2) und dem inneren Trägergehäuse (4) eine Durchflußöffnung (6) für die Flüssigkeit vorgesehen ist,
daß das Trägergehäuse (4) mit einem Abdichtelement (16) flüssigkeitsdicht verschlossen ist und
daß das Innere des Trägergehäuses (4) mit der Außenmantelfläche des Gehäuses (2) über einen Durchführungskanal (7) für die Kabel verbunden ist.

2. Ultraschall-Durchflußmesser nach dem vorhergehenden Anspruch,
dadurch gekennzeichnet,
daß das Trägergehäuse (4) mittels Strömungsrippen (5) mit dem Gehäuse (2) verbunden ist.

3. Ultraschall-Durchflußmesser nach Anspruch 2,
dadurch gekennzeichnet,
daß der Durchführungskanal (7) innerhalb der Strömungsrippe (5) verläuft.

4. Ultraschall-Durchflußmesser nach einem der vorhergehenden Ansprüche,
dadurch gekennzeichnet,
daß die Durchflußöffnung (6) um die Achse des Meßrohres (1) konzentrisch angeordnet ist.

5. Ultraschall-Durchflußmesser nach Anspruch 4,
dadurch gekennzeichnet,
daß die Durchflußöffnung (6) als teilkreisförmiger Ring ausgebildet ist.

6. Ultraschall-Durchflußmesser nach einem der vorhergehenden Ansprüche,
dadurch gekennzeichnet,
daß in dem Trägergehäuse (4) ein scheibenförmiger Träger (9) für den Ultraschallwandler (12) angeordnet ist.

7. Ultraschall-Durchflußmesser nach Anspruch 6,
dadurch gekennzeichnet,
daß der Träger (9) zur Innenwand des Trägergehäuses (4) abgedichtet ist.

8. Ultraschall-Durchflußmesser nach Anspruch 6 oder 7,
dadurch gekennzeichnet,
daß der Ultraschallwandler (12) innerhalb des Trägers (9) angeordnet ist.

9. Ultraschall-Durchflußmesser nach einem der Ansprüche 6 bis 8,
dadurch gekennzeichnet,
daß zwischen dem Ultraschallwandler (12) und dem Träger (9) ein Abstützelement (11) angeordnet ist.

10. Ultraschall-Durchflußmesser nach einem der Ansprüche 6 bis 9,
dadurch gekennzeichnet,
daß das Abdichtelement (16) an der Stirnseite des Trägers (9) befestigt ist.

11. Ultraschall-Durchflußmesser nach einem der Ansprüche 6 bis 10,
dadurch gekennzeichnet,
daß durch den Träger (9) hindurch elektrische Kontaktstifte (13) für den Ultraschallwandler (12) geführt sind.

12. Ultraschall-Durchflußmesser nach einem der vorhergehenden Ansprüche,
dadurch gekennzeichnet,
daß das Abdichtelement (16) eine Folie, insbesondere eine Metallfolie ist.

13. Ultraschall-Durchflußmesser nach einem der vorhergehenden Ansprüche,
dadurch gekennzeichnet,
daß innerhalb des Meßrohres (1) ein schräg gestelltes Durchflußrohr (17) angeordnet ist.

14. Ultraschall-Durchflußmesser nach Anspruch 13,
dadurch gekennzeichnet,
daß der Querschnitt des Durchflußrohres (17) oval ist.

15. Ultraschall-Durchflußmesser nach einem der vorhergehenden Ansprüche,
dadurch gekennzeichnet,
daß in einem der beiden Gehause (2) zusätzlich noch ein Temperatursensor (14) angeordnet ist.

16. Ultraschall-Durchflußmesser nach Anspruch 15 sowie nach einem der Ansprüche 6 bis 11,
dadurch gekennzeichnet,
daß der Temperatursensor (14) auf der Rückseite des Trägers (9) angeordnet ist.

17. Ultraschall-Durchflußmesser nach Anspruch 16,
dadurch gekennzeichnet,
daß zwischen dem Temperatursensor (14) und dem Boden des Trägergehäuses (4) ein Wärmeleitelement (8) angeordnet ist.

18. Wärmeenergiemengenmesser nach einem der Ansprüche 15 bis 17,
